# EUROPEAN PATENT APPLICATION

(11) **EP 4 151 966 A1**
(43) Date of publication of application: **22.03.2023**
(21) Application number: 21197832.5
(22) Date of filing: 20.09.2021
(51) Int. Cl.: G01J 3/44, G01J 3/02, G02B 21/08, G01J 3/28, G01J 3/10

(54) **APPARATUS AND METHOD FOR RECORDING SPECTRALLY RESOLVED IMAGES OF A SAMPLE**

(71) Applicant: Leibniz-Institut für Astrophysik Potsdam (AIP), 14482 Potsdam, Brandenburg (DE)
(72) Inventor: Schmälzlin, Elmar, Dr., 14482 Potsdam (DE); Korinth, Florian, Dr., 13359 Berlin (DE); Roth, Martin, Prof. Dr., 14547 Beelitz (DE); Gao, Lu, 14480 Potsdam (DE)
(74) Representative: Heinemeyer, Karsten

(57) **Abstract**

An apparatus (1) and a method for recording spectrally resolved images of a sample (2) are described. The apparatus (1) comprises a radiation source (3), an excitation-beam path (4) with optical means (7) for guiding excitation radiation emitted by the radiation source (3) at least partially onto at least one excitation spot (6) located in a plane of interest of the sample (2), and a detection beam path (5) with optical means (8) for guiding radiation emitted by the at least one excitation spot (6) of the sample (2) due to its excitation onto at least one receiver unit (9).

The described technical solution is characterized in that the radiation source (3) comprises at least one laser source (10) and a device (11) with an input which is optically at least indirectly coupled to said laser source (10) and designed to generate a plurality of radiation spots (18) at its output emitting the excitation radiation, and that the optical means (8) for guiding radiation emitted by the at least one excitation spot (6) of the sample (2) comprises a detection assembly (12) generating a plurality of detection spots (13) and guiding light from said detection spots (13) to the at least one receiver unit (9) connected or connectable to a spectrograph (14).

## Description

The present invention relates to an apparatus and a method for recording spectrally resolved images of a sample. The apparatus comprises a radiation source, an excitation beam path with optical means for guiding excitation radiation emitted by the radiation source at least partially onto at least one excitation spot located on a surface of the sample, and a detection beam path with optical means for guiding radiation emitted by the at least one excitation spot of the sample due to its excitation onto at least one receiver unit.

The invention lies in the field of integral field spectroscopy which has become an important sub-discipline of astronomy with the proliferation of large aperture, high-resolution telescopes where is a need to study the spectra of extended objects as a function of position or of clusters of many discrete stars of point sources in a small field. Such spectroscopic investigations have previously been carried out with long slit spectrographs in which the spectrum is dispersed perpendicular to the slit and spatially resolution is obtained in the dimension along the slit. Then by stepping the position of the slit, the spectrum of points in the image field can be obtained, but the process is comparatively slow and wasteful of potentially restricted telescope time.
Therefore, integral field spectrographs are used to speed up such observation by simultaneously obtaining spectra in a two-dimensional field. As the observation times in observatory are scarce and therefore cost-intensive, the need for such multiplex instruments has become more and more pressing.
A so-called integral field unit divides the field of view into many cells or segments to obtain a comprehensive overview of the whole.

In astronomy integral field units are used to study extended objects, such as nebulae galaxies or a crowded cluster of stars or galaxies in one shot, using integral field spectroscopy. Here, the signal from each cell or pixel of the field is fed into a spectrograph, which then generates a spectrum for each individual pixel. All the resulting spectra build a data set, which contains the entire 2D field of view and the third dimension drawn from the spectrograph, which splits the light into its different colours or wavelengths. Eventually, a hyperspectral image containing spatial and spectral information for each single pixel is received. Hyperspectral images are widely used in Earth remote sensing, and more specifically in weather forecasting, in the monitoring of natural disasters and climate change.

Furthermore, integral field spectroscopy can be used to record spectrally resolved Raman images in a single exposure process. For the acquisition of Raman images microscope assemblies are mostly used, which are similar to fluorescent microscopes. Excitation laser light is directed onto a sample via a dichroic mirror and the resulting Raman signals are directed through the slit of the microscope camera to a spectrograph.
According to a technical solution described in "M.M. Roth, A. Kelz, T. Fechner, T. Hahn, S.-M. Bauer, T. Becker, P. Böhm, L. Christensen, F. Dionies, J. Paschke, E. Popow, D. Wolter, J. Schmoll, U. Laux, W. Altmann, PMAS: The Potsdam Multi-Aperture Spectrophotometer. I. Design, Manufacture, and Performance, PASP 117 (2005) 620-642," a fiber bundle is arranged in the image plane of the camera shaft. Here, each individual fiber guides light emitted by excitation spots on the surface of the sample, and since the fibers are arranged in a row in front of the slit of a wide-field spectrograph the spectra of all excitation spots can be recorded separately in such a way that a Raman image with spatial resolution in the x- and y-directions is obtained in a single exposure process.
The Potsdam Multi-Aperture Spectrophotometer described in the publication mentioned above is a dedicated integral field spectrophotometer optimized to cover the optical wavelength regime of 0.35 to 1 µm. It is based on the lens array-fiber bundle principle of operation. The instrument employs and all refractive fiber spectrograph built with CaF₂ optics to provide good transmission and high image quality over the entire nominal wavelength range. A set of user-selectable reflective gratings provide low to medium spectral resolution of approximately 1.5, 3.2, and 7 A in first order, depending on the groove density. While the standard integral field unit uses a 16 x 16 lens array, which provides seeing-limited sampling in a relatively small field of view in one of three magnifications, a recently retrofitted bare fiber bundle expands the field of view to a hexagonal area with a footprint of 65" x 74". This technique was already transferred successfully into imaging Raman spectroscopy (E. Schmalzlin, B. Moralejo, M. Rutowska, A. Monreal-lbero, C. Sandin, N. Tarcea, J. Popp, M.M. Roth, Raman Imaging with a Fiber-Coupled Multichannel Spectrograph, Sensors 14 (2014) 21968-21980). However, with previous integral field spectrographs it was not possible, to resolve the Raman spectra of the samples in a satisfactory manner also in the z-direction

In general, confocal test setups are used to generate three dimensional Raman images of samples, e. g. to record Raman spectra with spatial resolution in the x-, y-, and z-directions. Confocal settings focus the excitation light as sharply as possible within a point. Outside this point the excitation intensity and therefore also the Raman signal decreases clearly. Thus, only the relevant signal in the focus point is dominant.
In addition, a pinhole is arranged within the detection beam path in an intermediate image plane. Hence, only light emitted from the positions of the excitation spots located on the plane or area of interest of the sample is focused on the intermediate image plane and passes through the pinhole. Signals generated outside below or above excitation spots are defocused at the intermediate image plane, and therefore are mostly faded out. In addition, the pinhole improves the resolution in x- and y-directions.

To realize very small excitation spots on the surface of the sample in known Raman microscopes laser light is guided by the help of a single-mode fiber. Here, the intermediate image plane with the pinhole is usually located in the camera slot of the microscope.

Instead of a classic pinhole the front surface of an optical fiber can also be placed at the intermediate image plane, whereat the core of the optical fiber corresponds to the openings of a pinhole. These arrangements provide Raman images with a good x-, y- and z-resolution. However, with known microscope systems in a single exposure process only a single point of the sample is recorded. To obtain a three-dimensional Raman image, the entire sample must be scanned point by point in all spatial directions. This is extremely time-consuming. Even with samples of microscopic dimensions such measurements often take hours to days.

Alternative and more time-saving options use a combination of free beam laser, microlens arrays and pinhole arrays to generate many excitation spots. For this, "Okuno, H. Hamaguchi: Multifocus confocal Raman microspectroscopy for fast multimode vibrational imaging of living cells Opt. Lett. 35 (2010) 4096-4098" describes an optical system with an inverted microscope equipped with a microlens array, a pinhole array, a fiber bundle, and a multichannel Raman spectrometer. Here, a widened laser beam impinges on a microlens array in such a way that the point pattern formed in the focal plane of the microlens array is imaged onto the sample. On the detection side a bundle of 48 fibers is used, combined with a pinhole array which is arranged at the intermediate image plane between the dichroic mirror and a microscope objective. On the one hand side, the pinhole array ensures the confocal effect in the detection or signal path, on the other hand it removes undesired excitation light that has passed through the microlens array without collimating. Here, the confocal set-up is used to avoid that fluorescence light reaches the spectrograph, and thus to improve the contrast of two-dimensional Raman images.

Taking all technical solutions known from the prior art into account, it is still a problem to record three-dimensional Raman images with a satisfactory solution and within a reasonable time.

The instant invention is directed to the problem of how to overcome some or all the problems known from the prior art. In particular, it is an object of the invention to record three-dimensional Raman images and to resolve Raman spectra of different samples in a satisfactory manner, and in the z-direction. In addition, the time necessary to obtain a three-dimensional Raman image should be reduced efficiently compared to known technical solutions. Regarding this, a time saving process and an apparatus for the implementation of this process should be provided to make it possible to obtain a three-dimensional Raman image by generating a plurality of excitation spots on the surface of a sample with the help of a comparative easy optical set up.

The objectives mentioned above are met with an apparatus according to claim 1 as well as with a method according to claim 13. Furthermore, claim 15 contains a specific use of an apparatus, respectively of the method according to the invention. Preferred embodiments of the invention are disclosed in the dependent claims and will be explained in detail in the following description. Additionally, certain specific embodiments of the invention are explained with the help of drawings.

The invention is based on an apparatus for recording spectrally resolved images of a sample comprising a radiation source, an excitation beam path with optical means for guiding excitation radiation emitted by the radiation source at least partially onto at least one excitation spot located in a plane or area of interest of the sample, and a detection beam path with optical means for guiding radiation emitted by the at least one excitation spot of the sample due to its excitation onto at least one receiver unit. According to the invention the radiation source comprises at least one laser source and a device with an input, which is optically at least indirectly coupled to said laser source and designed to generate a plurality of radiation spots at its output emitting the excitation radiation, and that the optical means for guiding radiation emitted by the at least one excitation spot of the sample comprises a detection assembly generating a plurality of detection spots and guiding light from said detection spots to the at least one receiver unit connected or connectable to a spectrograph. Preferably, the detector unit and/or the spectrograph comprises a slit into which radiation emitted by the optical means for guiding radiation from the at least one excitation spot is guided.

With the help of the technical solution according to the invention the problem of insufficient resolution is solved based on the combination of means for generating a plurality of excitation spots in the plane of interest of the sample to be examined and a detection assembly generating a plurality of detection spots and guiding light from that detection spots to the at least one receiver unit. Preferably, a plurality of optical fibers, respectively a fiber bundle is used both for the detection of the Raman signals in the image plane and for the guiding of light emitted by the laser source. Thus, it is possible to record spectrally resolved images of the sample by moving said plane of interest in z-direction and taking images at different points. Due to the invention this scanning procedure can be carried out comparatively quickly.
In general, it is conceivable that on the excitation side a plurality of single-mode fibers is arranged within the excitation beam path to generate a plurality of radiation spots at its output, whereat radiation emitted by these radiation spots is guided to the plane of interest of the sample in such a way that a plurality of excitation spots is generated on this surface. Due to the excitation these excitations spots emit excitations radiation, respectively Raman Signals. The excitation radiation emitted by the excitation spots is then guided with the help of optical means arranged within the detection path, e. g. a plurality of multimode-fibers, to the receiver unit, which is connected or connectable to a spectrograph, especially a spectrograph suitable for evaluating Raman signals. According to the invention on the detection side within the detection beam path a detection assembly is arranged, which provides at its input end a plurality of detection spots in the image plane and guides light from these detection spots to the at least one receiver unit connected or connectable to a spectrograph. With the help of the detection assembly radiation emitted by the excitation spots and received by the detection spots is split off to evaluate the different Raman spectra in a Raman spectrograph.

In a preferred embodiment of the invention the detection assembly comprises a plurality of multi-mode optical fibers, whereat inputs of said multi-mode fibers form the detection spots of the detection assembly. According to this technical solution a plurality of multi-mode optical fibers, respectively a fiber bundle comprising multi-mode fibers, is used for the detection of Raman signals in the image plane of a Raman microscope. Alternatively, it is conceivable, that the detection assembly comprises at least one mirror array, in particular a mirror array stack, instead of the plurality of multimode optical fibers. Here, the mirror array acts as a receiver of the radiation excited by the excitation points of the sample, couples the radiation into the receiver slit of a spectrograph, thereby reformatting optically a rectangular field into a quasi-continuous pseudo-slit located at the entrance focal plane of the receiver unit, especially of a spectrograph. Realizing this technical solution, the mirror array transforms the rectangular field of view into a series of subslits, that forms the entrance classical slit of the spectrograph and recomposes the signal at the entrance of the spectrograph. Preferably, the mirror array consists of a stack of several thin mirrors powered or not with a particular orientation to redirect the radiation in different directions.

According to a further specific embodiment of the invention the device designed to generate a plurality of radiation spots at its output emitting excitation radiation comprises a plurality of single-mode optical fibers, respectively a fiber bundle with several single-mode optical fibers, guiding radiation emitted by the laser source at least partially into the excitation path. Due to the arrangement of these single-mode fibers, especially their output ends, a plurality of excitation spots located on a surface of the sample and due to their excitation emitting radiation, respectively Raman signals are generated. According to this technical solution said plurality of single-mode optical fibers is arranged on the excitation side of the sample and consists of single-mode fibers, so that the excitation spots on a surface of the sample are as small as possible. If, for example, a fiber bundle comprising several single-mode fibers is used for the excitation, the corresponding number of excitation spots are generated on the surface of the sample. The pattern of the excitation spots on the surface of the sample in a sample plane corresponds to the arrangement of the output and off the plurality of single mode fibers it is clear, that the arrangement of the output end of the single-mode fibers.
Furthermore, it is advantageously conceivable that between the laser source and the device designed to generate a plurality of radiation spots at its output end emitting excitation radiation at least one photonic lantern is arranged. In general, photonic lanterns allow a low loss transfer of light guided in a multi-mode optical fiber or waveguide into a discrete number of single-mode fibers, thus enabling the use of single-mode photonic technologies in multi-mode systems. To couple sufficient laser light into the plurality of single-mode fibers, for example up to 100 single-mode fibers of the fiber bundle on the excitation side of the sample, it is conceivable to implement the fiber bundle as a fan out a cable. Each individual fiber could then be coupled to a single laser module. However, the provision of many lasers for example 200 with corresponding coupling optics for single-mode fibers is complex. Therefore, advantageously a photonic lantern is used to couple excitation radiation guided by a multi-mode fiber into a plurality of single-mode fibers. With the help of a photonic lantern, it is possible to split the radiation emitted by the radiation source and coupled into a multi-mode fiber in radiation guided by a plurality of single-mode fibers.
Preferably, the photonic lantern is made from specifically fused fibers but could also be formed as light guiding arrangements on flat chips. According to a preferred embodiment of the invention a photonic lantern is used to split the signal from a multi-mode fiber to a plurality of single-mode fibers comprising 7 to 1000, preferably 200 to 500 and particularly preferred 400 single-mode fibers. In accordance with this embodiment a single laser coupled to a multi-mode fiber would be sufficient to generate the excitation radiation needed. In addition, the use of several photonic lanterns and/or several laser sources is also conceivable.

The invention combines integral field multichannel spectroscopy and three-dimensional confocal Raman spectroscopy. According to a preferred embodiment of the invention a fiber bundle made of single-mode optical fibers guides radiation onto the plane of interest of a sample in such a way that a plurality of excitation spots emitting Raman radiation or Raman signals is generated in the plane of interest. In this solution the radiation, in particular light emitted by at least one laser source and guided through the single-mode optical fibers is focused such that extremely small excitation spots are generated whereat these smallest possible dots ensure optimal resolution in the z-direction and thus the possibility of recording three-dimensional Raman images. Using this optical set-up, the recorded Raman images have the same quality as those obtained with a comparatively slow single-channel Raman microscope. Advantageously, the fiber bundle on the excitation side comprises 7 to 1000, preferably 300 to 500 and particularly preferred at least almost 400 single-mode fibers are used. Therefore, a corresponding number of excitation spots are generated and a measurement 7 to 1000 times faster than a process for scanning an appropriate number of excitation spots point by point. Furthermore, due to the small size of the excitation spots the resolution in x- and y-direction is improved, and since the focus is very sharp an excitation intensity of the radiation emitted by the excitation spots can be achieved so that interfering fluorescence due to bleaching is reduced.
Still, by using a plurality of single-mode fibers, respectively a fiber bundle different point patterns can be created in a very flexible manner by arranging the fibers according to the desired pattern, whereat a fiber bundle is very robust and an optical set-up can be mounted without great effort compared to set-ups using free beam structures with microlens arrays and perforated diaphragms. In addition, the integration of a photonic lantern into the excitation path between a radiation source and the plurality of single-mode fibers for guiding radiation from at least one multi-mode fiber into a number of different single-mode fibers allows to couple light into the plurality of single-mode fibers very efficiently.
According to an alternative technical embodiment of the invention it is conceivable that the device designed to generate a plurality of radiation spots at its output end emitting excitation radiation comprises at least one light modulator.

In a further embodiment of the invention the multi-mode optical fibers of the detection assembly have a core diameter of 10 to 400 µm, preferably of 20 to 200 µm and particularly preferred at least almost 100 µm, especially 105, especially 105m. Here, the core diameter of the multimode fibers on the detection side and to a certain extent also the numerical aperture of the detection assembly together with the excitation spot size determine the resolution of the recorded Raman images in z-direction. Furthermore, it is conceivable, that the optical means for guiding excitation radiation onto the sample and/or the optical means for guiding radiation emitted by the at least one excitation spot of the sample comprises at least one collimation lens and/or at least one tube lens. In a very simple embodiment of the invention the tube lens, which guides radiation to the input ends of the multi-mode fibers of the detection assembly and the collimation, respectively tube lens guiding the excitation radiation and being preferably located in the excitation beam path behind the output end of the single-mode fibers are of identical design.
According to another preferred embodiment, a plurality of single-mode optical fibers and of multi-mode optical fibers are used which have at least nearly the same structure and/or the output respectively input ends form the same pattern.
Still, it is advantageous when the single-mode optical fibers and the multi-mode optical fibers have at least nearly the same edge diameters. Thus, on the excitation side advantageously a fiber bundle comprising a plurality of single-mode optical fibers generates a corresponding number of excitation spots, whereat the point pattern in the sample plane corresponds to the arrangement of the output end of the single-mode fibers. If on the detection side a plurality of fibers, especially multi-mode fibers with identical overall sizes and fiber arrangement is in the image plane of the microscope a pinhole array matching with the excitation point pattern is created. However, it is also conceivable that single-mode optical fibers on the excitation side and multi-mode optical fibers on the detection side fiber have different sizes and fiber arrangements, and that the excitation radiation and/or detection radiation, respectively the relevant Raman signal are guided in a suitable manner with more complicated optics.

According to specific embodiment of the invention the receiver unit and/or a Raman spectrograph for evaluating the incident detection radiation is at least partly coupled to an information unit and/or a data processing unit for a uni- and/or bidirectional signal and/or data transfer. Furthermore, it is conceivable that generated data are stored in a suitable data storage.

Furthermore, the invention also relates to a method for recording spectrally resolved images of a sample comprising the steps of guiding excitation radiation from at least one radiation source via an excitation beam path with optical means at least partially onto at least one excitation spot located in plane of interest of the sample and guiding radiation emitted by the at least one excitation spot of the sample due to its excitation via a detection beam path onto at least one receiver unit. According to the invention the radiation is emitted by a laser source and is guided to an input of a device which is optically at least indirectly coupled to said laser source and the plurality of radiation spots emitting the excitation radiation are generated at the output of said device. Furthermore, the radiation excited by the excitation spots of the sample and then protruding over the detection path is received by a plurality of detection spots formed by a detection assembly and then the radiation is guided to the at least one receiver unit which is connected or connectable to a spectrograph, especially to record and evaluate a Raman signal. The radiation received by the detection assembly is preferably coupled into a plurality of multi-mode optical fibers, whereat input end of said multi-mode fibers form the detection spots. According to a specific embodiment the radiation emitted by the laser source is guided to the excitation spots located in the plane of interest of the sample with the help of a plurality of single-mode optical fibers. Regarding this, it is conceivable that radiation, respectively light emitted by the laser source is initially guided through a multi-mode optical fiber and then coupled into the several wave guides of the single mode optical fiber by a photonic lantern.

Preferably the apparatus according to at least one of the above-mentioned embodiments and/or the method described above is preferably used for tissue and/or tumor analysis, for the detection and/or determination of particles located in a sample, the examination of marine organism and/or for material testing. With the help of an apparatus and/or a method according to the invention Raman spectroscopy of a three-dimensional sample can be realized very effectively and in a comparatively time-saving manner.

Further features, properties and advantages of the present invention will become clear from the following description of specific embodiments in conjunction with the accompanying drawings. The embodiments do not limit the scope of the present invention which is determined by the independent claims. The figures show:
- Fig. 1:: Schematic representation of an optical set-up based on the confocal principle, which is used by the invention, and
- Fig. 2:: Schematic representation of an apparatus according to the invention comprising a fiber bundle with a plurality of single-mode fibers on the excitation side and a fiber bundle with a plurality of multi-mode optical fibers on the detection side.

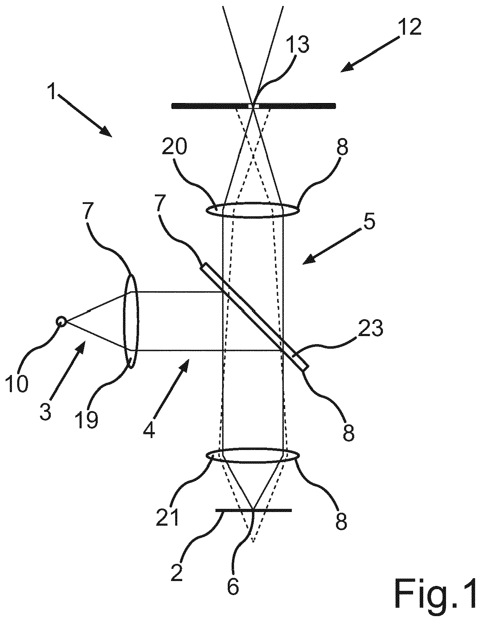

Fig. 1 shows a schematic representation of the confocal principle, which is used by an apparatus 1 or method according to the invention. According to the optical set-up shown in fig. 1, an infinitely corrected microscope is used, whereat an objective 21 and a tube lens 19 are combined in such a way that light leaves the tube lens 19 in parallel and is then focused with the help of the objective 21. Thus, between the tube lens 19 and the objective 21 radiation, especially light propagates in parallel and the light emitted by a laser 10 which is used here as a point radiation respectively light source 3 is focused on the sample 2 in the focal plane. Due to the excitation at least one excitation spot 6 in the plane of interest of the sample 2 emit radiation, which corresponds to a Raman signal. The radiation emitted by the excitation spots 6 is guided with the help of optical means 8 to a detection assembly 12, which comprises a tube lens 20 to refocus the radiation as an intermediate image in the plane of a pinhole in such a way, that the radiation can pass through the holes. Radiation generated in the sample 2 below or above the foci is out of focus in the pinhole plane and only a small proportion of this radiation passes through the holes in the pin hole plane.

The achievable spatial resolution depends on the sizes of the excitation spots 6 and the pinhole, whereat the generation of a particularly small spot enhances the resolution of the recorded images. For this reason, commercially available Raman microscopes use a laser source 10 and a single-mode optical fiber 15 on the excitation side. It should be mentioned that for removing background signals from the excitation laser light, normally an optical clean up filter 24 is put in the excitation beam path between the tube lens 19 and the dichroic mirror 23. Furthermore, a long pass or notch filter 25 is put in the detection beam path between the dichroic mirror 23 and the tube lens 20 to remove backscattered excitation light to avoid oversaturation of the spectrograph.

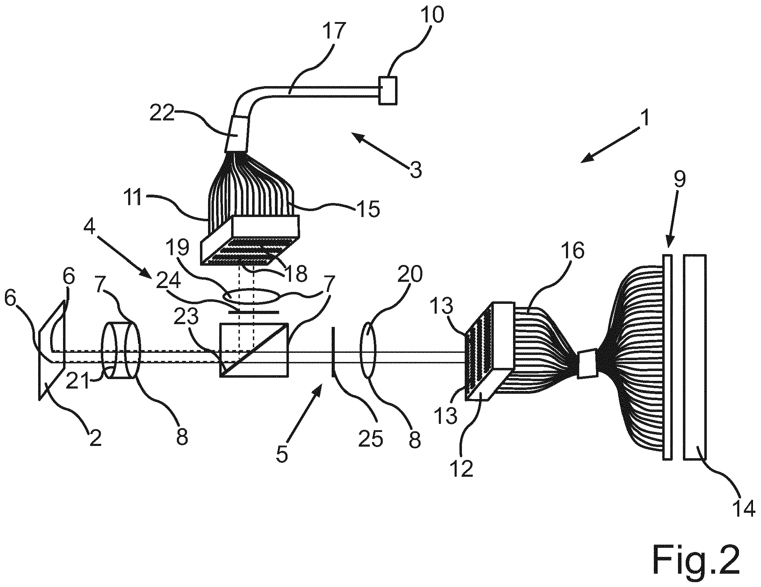

Fig. 2 shows a schematic representation of an apparatus 1 according to the invention. The apparatus 1 shown is a confocal multichannel Raman microscope working on the principle of integral field spectroscopy. Here, excitation radiation is generated by a laser 10 used as radiation source 3 and guided through a multi-mode optical fiber 17 and a photonic lantern 22 splitting the light propagating though the multi-mode fiber 17 to a number of different single-mode fibers 15 of a fiber bundle arranged in the excitation beam path 4. According to the embodiment shown in fig. 2 the fiber bundle on the excitation side comprises 200 single-mode fibers 15.
In this optical set-up the output ends of the plurality of single-mode optical fibers 15 form an array of radiation spots 18 emitting excitation radiation, which is guided through a tube lens 19, a dichroic mirror 23 used as beam splitter and a microscope objective 21 onto the plane of interest of the sample 2. Due to the design, dimension, and pattern of the radiation spots 18 formed by the output ends of the plurality of single-mode optical fibers 15 an array of corresponding excitation spots 6 is generated on the surface of the sample 2, which then emit radiation, so-called Raman signals. The radiation emitted by the excitation spots 6 and protruding along the detection beam path 5 is guided through the dichroic mirror 23 and impinges on a detection assembly 12, which comprises a tube lens 20 to focus the radiation to an intermediate image plane. Within this intermediate image plane, a number of detection spots 13 is arranged formed by the input ends of a plurality of multi-mode fibers 16 of a detection fiber bundle. The multi-mode fibers 16 on the detection side are of the same design, edge size, and arrangement as the single-mode fibers 15 on the excitation side. According to the technical solution shown in fig. 2 the detection fiber bundle, especially the input ends of the multi-mode fibers 16 are arranged in the intermediate image plane of the microscope in such a way that the pinhole array formed by fiber cores of the input ends matches with the pattern of the excitation spots 6, which is generated by the radiation emitted by the radiation spots 18 formed by the single-mode fibers 15 located on the excitation side. Hence, the core diameter of the multi-mode optical fibers 16 on the detection side together with the size of the excitation spots 6 on the excitation side determine the resolution of the recorded Raman images. The core diameters of the single-mode fibers 15 are in the range of 2 to 9 µm, the diameters of the cores of the multimode fibers 16 are in the range of 20 to 200 µm. Finally, radiation received by the input ends the plurality of multi-mode fibers 16 of the detection assembly 12 is guided to a receiver unit 9 in the shape of a slit being the optical input of a spectrograph 14, according to fig. 2 a Raman spectrograph for evaluation. It should be mentioned that for removing background signals from the excitation laser light, normally an optical clean up filter is put in the excitation beam path between the tube lens 19 and the dichroic mirror 23. Furthermore, a long pass or notch filter is put in the detection beam path between the dichroic mirror 23 and the tube lens 20 to remove backscattered excitation light to avoid oversaturation of the spectrograph.

According to the embodiment shown in fig. 2 the cores of the multi-mode fibers 16 located on the detection side act as pinhole array compared to the optical set-ups known from the prior art. Furthermore, it is important that many radiation spots 18 are generated by a plurality of single-mode fibers 15 located on the excitation side. In the optical set-up shown in fig. 2 the tube lens 19 on the excitation side and the tube lens 20 on the detection are identical in size and design as well as the arrays of radiation spots 18 at the output end of the single-mode fibers 15 and of detection spots 13 at the input ends of the multi-mode optical fibers 16 have the same structure. Therefore, during operation of the apparatus 1 the excitation spots 6 and the detections spots 18 are matched to evaluate the recorded Raman signals. Radiation generated in the sample 2 below or above the foci is out of focus in the pinhole plane and only a small proportion of this radiation passes through the holes in the pin hole plane.
Furthermore, due to the use of a photonic lantern 22 coupling light from a multi-mode optical 22 into a number of single-mode fibers 15, it is possible to use only one laser source 10 as radiation source 3.
Although the technical solution described above is used for the recording of Raman-images, the invention can also be implemented in optical set ups for the recording of fluorescence images. Here, the excitation spots in the plane of interest on or in the sample excite fluorescence radiation which is the guided to a spectrograph for evaluation.

### List of reference numbers

- 1: apparatus for recording spectrally resolved images of a sample
- 2: sample
- 3: radiation source
- 4: excitation beam path
- 5: detection beam path
- 6: excitation spot
- 7: optical means for guiding excitation radiation
- 8: optical means for guiding radiation emitted by the excitation spots
- 9: receiver unit
- 10: laser source
- 11: device designed to generate a plurality of radiation spots
- 12: detection assembly
- 13: detection spot
- 14: spectrograph
- 15: single-mode fiber
- 16: multi-mode fiber
- 17: multi-mode fiber of the radiation source
- 18: radiation spot
- 19: tube lens located in the excitation beam path
- 20: tube lens located in the detection beam path
- 21: microscope objective
- 22: photonic lantern
- 23: dichroic mirror
- 24: optical clean up filter
- 25: long pass or notch filter

## Claims

1. Apparatus (1) for recording spectrally resolved images of a sample (2) comprising a radiation source (3), an excitation-beam path (4) with optical means (7) for guiding excitation radiation emitted by the radiation source (3) at least partially onto at least one excitation spot (6) located in a plane of interest of the sample (2), and a detection beam path (5) with optical means (8) for guiding radiation emitted by the at least one excitation spot (6) of the sample (2) due to its excitation onto at least one receiver unit (9),
**characterized in that** the radiation source (3) comprises at least one laser source (10) and a device (11) with an input which is optically at least indirectly coupled to said laser source (10) and designed to generate a plurality of radiation spots (18) at its output emitting the excitation radiation, and that the optical means (8) for guiding radiation emitted by the at least one excitation spot (6) of the sample (2) comprises a detection assembly (12) generating a plurality of detection spots (13) and guiding light from said detection spots (13) to the at least one receiver unit (9) connected or connectable to a spectrograph (14).

2. Apparatus according to claim 1,
**characterized in that** the detection assembly (12) comprises a plurality of multi-mode optical fibers (16), whereat inputs of said multi-mode fibers form the detection spots (13).

3. Apparatus according to claim 1,
**characterized in that** the detection assembly (12) comprises at least one mirror array.

4. Apparatus according to at least one of the preceding claims,
**characterized in that** the device (11) designed to generate a plurality of radiation spots (18) at its output emitting excitation radiation comprises a plurality of single-mode optical fibers (15) guiding radiation emitted by the laser source (10) at least partially into the excitation-beam path (4).

5. Apparatus according to at least one of the preceding claims,
**characterized in that** between the laser source (10) and the device designed (11) to generate a plurality of radiation spots (18) at its output emitting excitation radiation at least one photonic lantern (22) is arranged.

6. Apparatus according to at least one of the preceding claims,
**characterized in that** the device (11) designed to generate a plurality of radiation spots (18) at its output emitting excitation radiation comprises at least one light modulator.

7. Apparatus according to claim 2 to 6,
**characterized in that** the multi-mode optical fibers (16) of the detection assembly (12) have core diameters of 10 to 400 µm.

8. Apparatus according to at least one of the preceding claims,
**characterized in that** the optical means (7) for guiding excitation light and/or the optical means (8) for guiding light emitted by the at least one excitation spot (6) of the sample (2) comprise at least one collimation lens and/or at least one tube lens (19, 20).

9. Apparatus according to claims 4 to 8,
**characterized in that** the plurality of single-mode optical fibers (15) and the plurality of multi-mode optical fibers (16) have at least nearly the same structure and the single-mode optical fibers (15) and the multi-mode optical fibers (16) have at least nearly the same edge diameter.

10. Apparatus according to claims 4 to 9,
**characterized in that** the plurality of single-mode optical fibers (15) and/or the plurality of multi-mode optical fibers (16) comprise 7 to 1000, especially about 400 optical fibers.

11. Apparatus according to claims 4 to 10,
**characterized in that** each single-mode optical fiber (15) of the plurality of single-mode fibers (15) is optically coupled to a separate own laser source (10).

12. Apparatus according to at least one of the preceding claims,
**characterized in that** the receiver unit (9) and/or the spectrograph (14) is at least partly coupled to an evaluation unit and/or a data processing unit for uni- and/or bidirectional signal- and/or data transfer.

13. Method for recording spectrally resolved images of a sample (2) comprising the steps of guiding excitation radiation from at least one radiation source (3) via an excitation-beam path (4) with optical means at least partially onto at least one excitation spot (6) located in a plane of interest of the sample (2) and guiding radiation emitted by the at least one excitation spot (6) of the sample (2) due to its excitation via a detection beam path (5) onto at least one receiver unit (9),
**characterized in that** the radiation is emitted by a laser source (10) and guided to an input of a device (11) which is optically at least indirectly coupled to said laser source (10), and that a plurality of radiation spots (18) emitting the excitation radiation are generated at the output of said device (11), and that using the radiation received from the detection path (5) a plurality of detection spots (13) are generated and light from said detection spots (13) is guided to the at least one receiver unit (9), which is connected or connectable to a spectrograph (14).

14. Method according to claim 13
**characterized in that** radiation received from the detection beam path (5) is coupled into a plurality of multi-mode optical fibers (16), whereat inputs of said multi-mode fibers (16) form the detection spots (13).

15. Use of an apparatus according to one of the claims 1 to 12 or of a method according to claims 13 or 14 for tissue and/or tumor analysis, for the detection and/or determination of particles located in a sample, the examination of marine organism and/or for materials testing.
